(19) Europäisches Patentamt
European Patent Office
Office européen des brevets

(11) **EP 2 770 472 A1**

(12) # EUROPEAN PATENT APPLICATION

(43) Date of publication:
**27.08.2014 Bulletin 2014/35**

(51) Int Cl.:
**G06Q 30/06** (2012.01)          **G06F 17/30** (2006.01)

(21) Application number: **13305212.6**

(22) Date of filing: **25.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Picconi, Fabio
  92443 Issy Les Moulineaux cedex (FR)**
• **Pham, Xuan Thanh
  06904 Sophia Antipolos Cedex (FR)**

(74) Representative: **Huchet, Anne et al
Technicolor
1, rue Jeanne d'Arc
92443 Issy-les-Moulineaux Cedex (FR)**

(54) **Method and system for item recommendation**

(57)     Method of recommendation of an item to a user, said method comprising the steps of :

a) transmitting a recommendation request from a requesting terminal (4) to a first server (6), said request containing a user profile ;

b) distorting the user profile by the first server (6) to obtain a distorted user profile;

c) transmitting by the first server (6) to a second server (12) the distorted user profile;

d) computing by the second server (12) a recommendation result comprising at least one item on the basis of the distorted user profile and of an anonymous rating data previously provided by the first server (6) to the second server (12); and

e) transmitting the recommendation result from the second server (12) to the first server (6) and then to the requesting terminal (4).

FIG.1

**Description**

FIELD OF THE INVENTION

The present invention generally relates to the field of recommendation systems.

More particularly, the invention deals with the optimization of the cost of computation of item recommendations to users.

Thus, the invention provides a method and a system of recommendation of an item to a user. It also concerns a computer program implementing the method of the invention.

BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Recommendation systems are quickly becoming one of the cornerstones of the Internet. In a world with ever increasing choices, they are one of the most effective ways of matching users to items. Today, many websites use some form of such systems. Recommendation engines ask users to rate certain items, e.g. books, movies, or songs, infer the ratings of other items from this data, and use these inferred ratings to recommend new items to users.

In recommendation systems, server load is not constant but varies over time with a diurnal pattern. For example, the workload of a recommender system can vary greatly, depending on real life's events, such as shopping holidays or sales for an e-commerce system, film festival or movies premiere for a movie recommender.

Due to this variability, systems running on dedicated servers are provisioned for the peak load, which means that most of the time these dedicated servers are underutilized.

Besides, using the conventional recommendation systems, the data collected, if anonymized at all, can be de-anonymized and compromise the privacy of those users who submitted ratings.

SUMMARY OF THE INVENTION

The present invention proposes a solution for improving the situation.

Accordingly, the present invention provides a method of recommendation of an item to a user, said method comprising the steps of :

a) transmitting a recommendation request from a requesting terminal to a first server, said request containing a user profile;
b) distorting the user profile by the first server to obtain a distorted user profile;
c) transmitting by the first server to a second server the distorted user profile;
d) computing by the second server a recommendation result comprising at least one item on the basis of the distorted user profile and of an anonymous rating data previously provided by the first server to the second server; and
e) transmitting the recommendation result from the second server to the first server and then to the requesting terminal.

By anonymous rating data, it is meant here that this data does not contain any information permitting to infer the identity of the users from which such rating data was obtained.

Typically, the first server is a dedicated server, i.e. a server used exclusively by the recommendation service provider while the second server is an on-demand server, for instance a virtual machine that can be instantiated on-demand.

By using the present invention, and contrarily to the existing recommendation systems, the first, i.e. dedicated, server is provisioned for less than the peak load, and excess demand, typically during the peak hours, is forwarded to the second, i.e. the on-demand, server at step c). This results in significant cost savings compared to the existing systems wherein the recommendation result is computed by the dedicated server only.

Besides, remarkably, according to the present invention, the second server does not have access to the original user rating data stored on the first server, as it receives a distorted user profile and anonymous rating data. The privacy of the user is thus completely guaranteed.

Advantageously, the recommendation result computing uses a matrix factorization technique.

Such matrix factorization techniques are very popular and have good performance results.

According to a first embodiment, the matrix factorization technique is the Singular Value Decomposition, SVD, matrix factorization technique.

Advantageously, the method comprises steps of:

f) factorizing by the first server of a rating matrix into three matrices U, S and V, wherein the matrix U represents data relative to users and the matrix V represents data relative to items ;
g) storing the matrices U, S and V in the first server; and
h) transmitting to the second server the matrices S and V.

In this case, the anonymous rating data used by the second server to compute the recommendation comprise the matrices S and V.

Advantageously, the method comprises a step of regularly updating the matrices U, S and V by the first server and transmitting to the second server the updated matrices S and V.

The update of the matrices is preferably done during the off-peak hours. Then, the latest version of the matrices S and V is transmitted from the first server to the second server at the beginning of the peak hours.

Preferably, the step of updating the matrices uses the user profile included within the recommendation request.

Advantageously, the step of updating uses a modified version of the Brand algorithm.

The Brand algorithm is described in the papers by M. Brand: "Fast low-rank modifications of the thin singular value decomposition", Linear Algebra and its Applications, vol. 415, pp. 20-30, May 2006 and "Fast Online SVD Revisions for Lightweight Recommender Systems", in Proceedings of the Third SIAM International Conference on Data Mining, San Francisco (D. Barbari and C. Kamath, eds.), SIAM, 2003.

In the preferred embodiment of the present invention, an optimized version of this algorithm using four matrices instead of the conventional three matrices is implemented. This is a variant of the five-matrix optimization described in the aforementioned paper "Fast low-rank modifications of the thin singular value decomposition" by M. Brand.

According to a second embodiment, the matrix factorization technique is the Alternating Least Squares, ALS, matrix factorization technique.

Advantageously, the step b) of distorting the user profile comprises a step of adding random noise to said user profile.

Preferably, the first server controls the amount of added noise.

Choosing the amount of added noise permits to control the trade-off between privacy and accuracy of the recommendation.

Advantageously, the same noise is added to the user profile each time that a recommendation request containing said user profile is received by the first server.

Reapplying the same noise to the same user profile improves the protection from attackers which attempt to subtract the noise from several noisy vectors of the same user.

The invention also provides a system of recommendation of an item to a user, said system comprising:

a) a requesting terminal arranged to transmit a recommendation request to a first server, said request containing a user profile;
b) said first server arranged to :

- provide to a second server an anonymous rating data;
- distort the user profile to obtain a distorted user profile; and
- transmit to the second server the distorted user profile;

c) said second server arranged to:

- compute a recommendation result comprising at least one item on the basis of the distorted user profile and of the anonymous rating data previously provided by the first server to said second server; and
- transmit the recommendation result to the first server.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

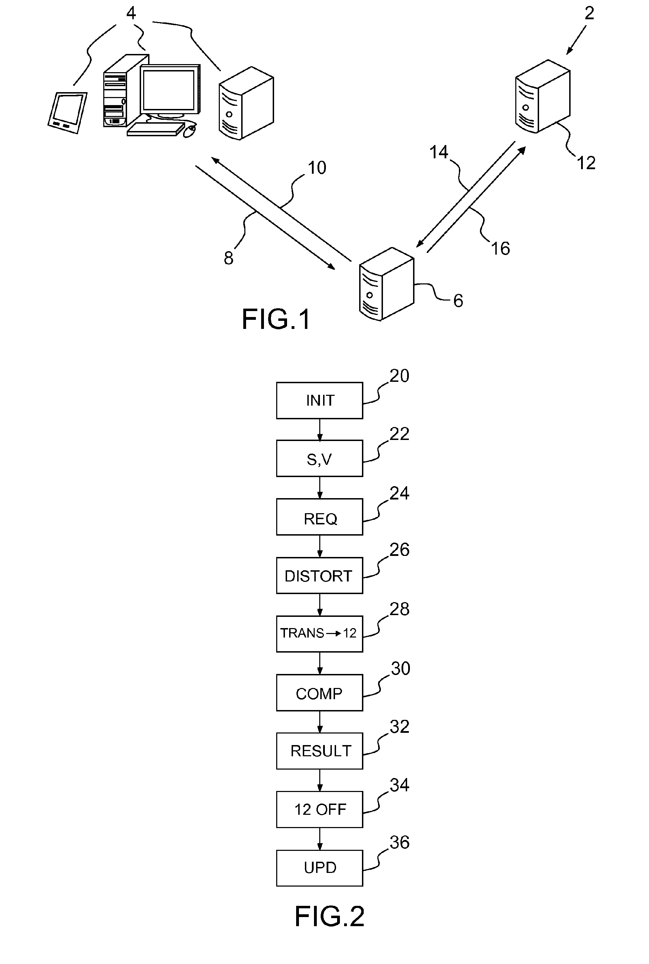

The invention thus provides a computer-readable program comprising computer-executable instructions to enable a computer to perform the recommendation method of the invention. The diagram of Figure 2 illustrates an example of the general algorithm for such computer program.

BRIEF DESCRIPTION OF THE DRAWINGS

The present invention is illustrated by way of examples, and not by way of limitation, in the figures of the accompanying drawings, in which like reference numerals refer to similar elements and in which:

- Figure 1 is a schematic view of a recommendation system according to an embodiment of the invention; and

- Figure 2 is a flowchart showing the steps of a recommendation method according to an embodiment of the present invention.

DETAILED DESCRIPTION OF PREFERRED EMBODIMENTS

Referring to Figure 1, there is shown therein a schematic view of a recommendation system 2 according to a preferred embodiment of the invention.

The recommendation system 2 comprises a requesting terminal 4. The requesting terminal 4 may be a user terminal such as a personal computer, a laptop, a tablet, a smart-phone, etc. The requesting terminal 4 can also be a server terminal requesting a recommendation from a service provider for the user.

Besides, the recommendation system 2 comprises a first server 6. The first server 6 is, according to a preferred embodiment, a dedicated server used exclusively by the recommendation service provider who installs and manages it. This first server 6 is typically billed on a month basis.

The requesting terminal 4 and the first server 6 communicate through transmission links 8, 10. The link 8 is used for the transmission of information from the requesting terminal 4 to the first server 6 while the link 10 is used for the transmission of information from the first server 6 to the requesting terminal 4.

Furthermore, the recommendation system 2 comprises a second server 12. The second server 12 is, according to a preferred embodiment, an on-demand server, i.e. a virtual machine that can be instantiated on-demand. This second server 12 is typically billed on an hour basis.

The first server 6 and the second server 12 communicate through transmission links 14, 16. The link 14 is used for the transmission of information from the second server 12 to the first server 6 while the link 16 is used for the transmission of information from the first server 6 to the second server 12.

The flowchart of Figure 2 illustrates the steps of the recommendation method of the invention implemented by the recommendation system 2, according to an embodiment.

According to this embodiment, the recommendation method is based on Singular Value Decomposition (SVD) of the rating matrix.

As already well-known in the art, the rating matrix A is a matrix wherein the columns represent items and the rows represent users. It is stored and used by the recommender system 2 to produce recommendations. The rating matrix contains real ratings, i.e. ratings provided by the users, as well as predicted ratings computed by the recommender system 2. Each rating is a value that represents the interest of a given user for a given item.

For instance, in movie recommendations, the rating is usually an integer from 1 to 5, where 1 means that the user does not like the movie at all, and 5 means that the user really likes the movie.

At step 20, the first server 6 decomposes the rating matrix A according to the SVD factorization into a product of three matrices U, S and V:

$$
\begin{bmatrix}
x_{11} & x_{12} & \cdots & x_{1q} \\
x_{21} & x_{22} & \cdots & x_{2q} \\
\vdots & \vdots & \ddots & \vdots \\
x_{p1} & x_{p2} & \cdots & x_{pq}
\end{bmatrix}
=
\begin{bmatrix}
u_{11} & \cdots & u_{1k} \\
\vdots & \ddots & \vdots \\
u_{p1} & \cdots & u_{pk}
\end{bmatrix}
\cdot
\begin{bmatrix}
s_1 & 0 & 0 \\
0 & \ddots & 0 \\
0 & 0 & s_k
\end{bmatrix}
\cdot
\begin{bmatrix}
v_{11} & \cdots & v_{1k} \\
\vdots & \ddots & \vdots \\
v_{q1} & \cdots & v_{qk}
\end{bmatrix}^{\mathsf{T}}
$$

where k is the rank of the rating matrix A and the singular values $s_1,...,s_k$ are sorted in descending order.

Preferably, the first server keeps only the r largest singular values along with the first r rows of U and S:

$$\hat{A} = \begin{bmatrix} x_{11} & x_{12} & \cdots & x_{1q} \\ x_{21} & x_{22} & \cdots & x_{2q} \\ \vdots & \vdots & \ddots & \vdots \\ x_{p1} & x_{p2} & \cdots & x_{pq} \end{bmatrix} = \begin{bmatrix} u_{11} & \cdots & u_{1r} \\ \vdots & \ddots & \vdots \\ u_{p1} & \cdots & u_{pr} \end{bmatrix} \cdot \begin{bmatrix} s_1 & 0 & 0 \\ 0 & \ddots & 0 \\ 0 & 0 & s_r \end{bmatrix} \cdot \begin{bmatrix} v_{11} & \cdots & v_{1r} \\ \vdots & \ddots & \vdots \\ v_{q1} & \cdots & v_{qr} \end{bmatrix}^T$$

By removing the small singular values, the noise and bias are effectively removed in the original matrix A, making it easier to correlate the users and the items, thus making better predictions. The resulting three matrices U, S, V are much smaller than A, thus making it easier to work with those matrices. After this factorization, it can be interpreted that the r singular values kept by the first server 6 represent r characteristics of the items. Each row in the U matrix represents a user and his/her level of preferences for these r characteristics, while each row in the V matrix represents an item and how much that item possesses these r characteristics.

The first server 6 stores the produced matrices U, S and V.

Then, the processing differs according to the first server's load. For instance, it is assumed that the load varies over time with a diurnal pattern. Thus, two periods of the day are distinguished here : peak hours, for example from 7:00 AM to 12:00 PM, and off-peak hours, for example from 12:00 PM to 7:00 AM.

At the beginning of the peak hours, for example at 7:00 AM, or at any time when the first server's load reaches a critical threshold value, the first server 6 transmits, at step 22, the matrices S and V to the second server 12 through the link 16.

At step 24, the requesting terminal 4 transmits a recommendation request to the first server 6 through the link 8, said request containing a user profile, i.e. data about the user requesting an item recommendation. The user profile preferably comprises a rating vector consisting in a list of <item, rating> pairs, corresponding to the ratings provided by the user. The number of items rated by a user is typically very small compared to the total number of items that can be recommended.

Alternatively, the recommendation request comprises only a user identifier that allows the first server 6 to retrieve the user's rating vector by other means, for example by consulting a user profile database stored within said first server 6.

The first server 6 stores the received user's rating vector for future update of the matrices U, S and V during the off-peak hours.

According to the present embodiment, the first server 6 is provisioned for less than the peak load and excess demand is forwarded to the second server 12.

Preferably, the requests from users whose rating vectors contain a large number of ratings are forwarded to the second server 12. This choice improves the accuracy of the recommendation provided by the second server 12.

It is assumed that the recommendation request received at step 24 satisfies this condition. Thus, it will be processed by the second server 12, as described in the following.

At step 26, the first server 6 distorts the rating vector received within the recommendation request.

According to a particular embodiment, the first server 6 performs this distortion by adding a random noise. Advantageously, the added noise comprises an aggregation of information obtained from all the users of the recommendation system.

Advantageously, the amount of added noise is chosen by the first server 6 in order to control the trade-off between privacy and accuracy.

If the request comes from a user whose rating vector had been already distorted when processing a previous request, the first server may distort the rating vector by re-applying the same noise employed to distort the rating vector in previous requests. For this, the first server 6 needs to persistently store the noise that it applies when a user's rating vector is distorted for the first time. Advantageously, reapplying the same noise to the same user profile protects the system from attackers which attempt to subtract the noise from several noisy vectors of the same user.

At step 28, the first server 6 transmits the distorted rating vector to the second server 12 through the link 16.

At step 30, the second server 12 computes a recommendation result using the distorted user's rating vector and the matrices S and V received at step 22.

At step 32, the second server 12 transmits the computed recommendation result to the first server 6 through the link 14. Said first server 6 then transmits this recommendation result to the requesting terminal 4 through the link 10.

Then, during the peak hours, the computation of the recommendation results for multiple recommendation requests for a plurality of users is split between the first server 6 and the second server 12, the requests whose rating vectors contain a large number of ratings being preferably processed by the second server 12 using a distorted version of said rating vector, as explained above.

A small degradation in recommendation accuracy is possible for the requests processed by the second server 12 due to the noise added to the rating vector forwarded to said second server 12. However, the split of the computation between both servers is still advantageous as it permits a trade-off between performance and cost, as the size of the first server 6 is chosen according to the recommendation service provider needs between the minimum and the fully dedicated provisioning. For example, the service provider can choose a first server size close to the minimum to minimize costs, or a first server size close to the maximum to minimize accuracy loss due to noise. Moreover, the threshold of the first server utilization beyond which the second server 12 is solicited can be chosen to control the amount of requests that may be delayed until the second server 12 finishes "booting" and starts processing requests. Choosing a lower threshold decreases the fraction of such delayed requests at the expense of a higher operational cost.

Of course, the recommendation requests that are handled by the first server 6 do not suffer from any accuracy degradation as no noise is added to them.

During the off-peak hours, the first server 6 becomes underloaded. Then, the second server 12 is shut down at step 34 so that all the recommendation requests are processed entirely by the first server 6.

This is clearly advantageous as the second server 12 is billed on an hour basis. Thus, only a little extra cost is necessary to deal with the excess recommendation requests, which further improves the trade-off between performance and cost. This cost is typically less than the cost of a dedicated server provisioned for the peak load, so underutilized most of the time.

At step 36, during the off-peak hours, the first server 6 updates the matrices U, S and V using the rating vectors that were received in recommendation requests during the peak hours, by implementing an optimized version of the Brand algorithm.

The Brand algorithm permits a quick update of the matrices U, S and V from their changes without having to compute the whole SVD model.

According to the optimized version of the Brand algorithm, used in an embodiment of the present invention, the rating matrix is decomposed in four matrices U, U', S, V, such that $A = UU'SV^T$. Matrices U and U' are constructed according to the method described in the aforementioned paper "Fast low-rank modifications of the thin singular value decomposition" by Brand. Matrices S and V are the same as in the conventional SVD factorization according to the Brand algorithm.

At step 36, updates when adding a new user are performed according to:

$$U \leftarrow [U \quad p] \quad \text{and} \quad U' \leftarrow \begin{pmatrix} U' & 0 \\ 0 & 1 \end{pmatrix}$$

where p is defined in the aforementioned paper "Fast low-rank modifications of the thin singular value decomposition" by Brand. Updates which do not add a new user are handled differently as per the conventional Brand technique.

Adding a large number of users will result in a matrix U with a large number of columns, increasing the computational complexity of further operations. To overcome this problem, whenever U reaches a given column threshold, the first server 6 re-computes matrices U and U' as follows: $U \leftarrow UU'$ and $U' \leftarrow I$ where I is the identity matrix. This operation lowers the number of columns in U, thereby speeding up future operations.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed as a reference to the plural and vice versa.

A person skilled in the art will readily appreciate that various parameters disclosed in the description may be modified and that various embodiments disclosed and/or claimed may be combined without departing from the scope of the invention.

More particularly, while the SVD recommendation algorithm is implemented in the above description, alternative recommendation algorithms may be implemented as well.

Examples of alternative recommendation algorithms include:

- Different matrix factorization techniques, such as Alternating Least Squares (ALS):

   Contrary to the SVD, the ALS factorization produces two matrices X and Y. In this case, the second server 12 stores and uses Y to compute recommendations during peak hours.

- Traditional Collaborative Filtering techniques such as nearest neighbor with user or item similarity: In this case, a noisy version of the entire rating matrix is stored in the second server 12 to produce recommendations.
- Clustering techniques: In this case, a clustered version of the rating matrix is stored in the second server 12. The clustered rating matrix may be stored as it is, i.e., without noise, on the second server 12 as it does not contain any original user rating vectors.

Besides, alternative techniques to add noise to both the rating vectors and the matrices forwarded to the second server may be used so that an observer cannot infer certain characteristics about the user, such as gender, sexual orientation, political affiliation, etc..

Furthermore, the ratings within the rating vector may be distorted by:

- substituting at least one of the ratings by another rating drawn from a suitable probability distribution; and/or
- suppressing at least one of the ratings; and/or
- adding at least one further rating that is drawn from a suitable probability distribution.

**Claims**

1. Method of recommendation of an item to a user, said method comprising the steps of :

   a) transmitting (24) a recommendation request from a requesting terminal (4) to a first server (6), said request containing a user profile ;
   b) distorting (26) the user profile by the first server (6) to obtain a distorted user profile;
   c) transmitting (28) by the first server (6) to a second server (12) the distorted user profile;
   d) computing (30) by the second server (12) a recommendation result comprising at least one item on the basis of the distorted user profile and of an anonymous rating data previously provided by the first server (6) to the second server (12); and
   e) transmitting (32) the recommendation result from the second server (12) to the first server (6) and then to the requesting terminal (4).

2. Method of claim 1, wherein the recommendation result computing uses a matrix factorization technique.

3. Method of claim 2, wherein the matrix factorization technique is the Singular Value Decomposition, SVD, matrix factorization technique.

4. Method of claim 3, further comprising steps of:

   f) factorizing by the first server (6) of a rating matrix into three matrices U, S and V, wherein the matrix U represents data relative to users and the matrix V represents data relative to items ;
   g) storing the matrices U, S and V in the first server (6); and
   h) transmitting to the second server (12) the matrices S and V.

5. Method of claim 4, further comprising a step of regularly updating (36) the matrices U, S and V by the first server (6) and transmitting to the second server (12) the updated matrices S and V.

6. Method of claim 5, wherein the step of updating the matrices uses the user profile included within the recommendation request.

7. Method of claim 5 or 6, wherein the step of updating uses a modified version of the Brand algorithm.

8. Method of claim 2, wherein the matrix factorization technique is the Alternating Least Squares, ALS, matrix factorization technique.

9. Method of any of claims 1 to 8, wherein the step b) of distorting the user profile comprises a step of adding random noise to said user profile.

10. Method of claim 9, wherein the same noise is added to the user profile each time that a recommendation request containing said user profile is received by the first server (6).

11. System (2) of recommendation of an item to a user, said system comprising:

   a) a requesting terminal (4) arranged to transmit a recommendation request to a first server (6), said request containing a user profile;
   b) said first server (6) arranged to :

   - provide to a second server (12) an anonymous rating data;
   - distort the user profile to obtain a distorted user profile; and
   - transmit to the second server (12) the distorted user profile;

   c) said second server (12) arranged to:

   - compute a recommendation result comprising at least one item on the basis of the distorted user profile and of the anonymous rating data previously provided by the first server (6) to said second server (12) ; and
   - transmit the recommendation result to the first server (6).

12. Computer-readable program comprising computer-executable instructions to enable a computer to perform the recommendation method of any of claims 1 to 10.

## FIG.1

## FIG.2

- INIT — 20
- S,V — 22
- REQ — 24
- DISTORT — 26
- TRANS→12 — 28
- COMP — 30
- RESULT — 32
- 12 OFF — 34
- UPD — 36

**EUROPEAN SEARCH REPORT**

Application Number

EP 13 30 5212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/191582 A1 (DICKER RUSSELL A [US] ET AL) 29 July 2010 (2010-07-29) * figure 1 * | 1-12 | INV. G06Q30/06 G06F17/30 |
| A | US 7 966 219 B1 (SINGH JAMES [US] ET AL) 21 June 2011 (2011-06-21) * figures 2,4 * | 1,11 | |
| A | WO 2010/132492 A2 (EXPERIAN MARKETING SOLUTIONS I [US]; STACK BRIAN [US]; LIENTZ ANDREW []) 18 November 2010 (2010-11-18) * abstract * | 1-12 | |

TECHNICAL FIELDS SEARCHED (IPC)

G06Q
G06F

The present search report has been drawn up for all claims

| Place of search | Date of completion of the search | Examiner |
|---|---|---|
| Munich | 26 June 2013 | Heselius, Per |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 5212

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2013

| Patent document cited in search report | | Publication date | Patent family member(s) | | Publication date |
|---|---|---|---|---|---|
| US 2010191582 | A1 | 29-07-2010 | US 2010191582 A1<br>US 2010191619 A1<br>US 2013097052 A1 | | 29-07-2010<br>29-07-2010<br>18-04-2013 |
| US 7966219 | B1 | 21-06-2011 | US 7966219 B1<br>US 2011213676 A1 | | 21-06-2011<br>01-09-2011 |
| WO 2010132492 | A2 | 18-11-2010 | US 2011060905 A1<br>WO 2010132492 A2 | | 10-03-2011<br>18-11-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. BRAND.** Fast low-rank modifications of the thin singular value decomposition. *Linear Algebra and its Applications,* May 2006, vol. 415, 20-30

- Fast Online SVD Revisions for Lightweight Recommender Systems. Proceedings of the Third SIAM International Conference on Data Mining, San Francisco. 2003